Europäisches Patentamt

European Patent Office

Office européen des brevets

(11) Veröffentlichungsnummer: **0 300 113 B1**

(12) **EUROPÄISCHE PATENTSCHRIFT**

(45) Veröffentlichungstag der Patentschrift: **15.07.92**

(51) Int. Cl.5: **B65G 53/46**, B65G 53/32

(21) Anmeldenummer: **88100582.1**

(22) Anmeldetag: **16.01.88**

(54) **Einschleusvorrichtung für trockenes Betongemisch und ähnliche Baustoffe in eine pneumatische Spritzförderleitung sowie Spritzmaschine mit einer solchen Einschleusvorrichtung.**

(30) Priorität: **07.07.87 DE 3722314**

(43) Veröffentlichungstag der Anmeldung:
**25.01.89 Patentblatt 89/04**

(45) Bekanntmachung des Hinweises auf die
Patenterteilung:
**15.07.92 Patentblatt 92/29**

(84) Benannte Vertragsstaaten:
**AT CH DE FR IT LI**

(56) Entgegenhaltungen:
**DE-B- 1 266 219**
**DE-B- 2 749 632**
**US-A- 4 118 075**

(73) Patentinhaber: **Meier, Ernst**
**Schützenstrasse 38**
**CH-8400 Winterthur(CH)**

(72) Erfinder: **Roehl, Franz**
**verstorben**
**(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

**Beschreibung**

Die Erfindung betrifft eine Einschleusvorrichtung für im wesentlichen trockenkörnige, schüttfähige Materialien, insbesondere für im wesentlichen trockenes Betongemisch und ähnliche Baustoffe, in eine pneumatische Spritzförderleitung gemäß dem Oberbegriff des Patentanspruches 1. Die Erfindung betrifft ferner eine Spritzmaschine, insbesondere für trockenes Betongemisch und ähnliche Baustoffe mit einer solchen Einschleusvorrichtung.

Spritzmaschinen für trockene und auch feuchte Betonmischungen sowie ähnliche körnige Baumaterialien und Auskleidungsmassen sind bekannt. Die überwiegende Zahl dieser bekannten Maschinen verwendet für das Einschleusen des mehr oder minder feinkörnigen Feststoffmaterials in die pneumatische Förder- oder Spritzleitung Einschleusvorrichtungen, die sich eines rotierenden Taschen- oder Zellenrades bedienen. Die Schleusenkammern sind hierbei innerhalb dieses Rades oder Rotors angeordnet und bewegen sich von einer Materialeintrittsöffnung zu einer Materialaustrittsöffnung, die je als ein Ausschnitt in den das Zellenrad im übrigen umgebenden und die Zellenkammern innerhalb des Rades seitlich fest verschließenden Gehäusewandteilen ausgebildet sind. Die einzelne Schleusenkammer muß also, um befüllt zu werden, zur Materialeintrittsöffnung bewegt werden, wird dann in abgedichtetem Zustand weiterbewegt, bis sie in Deckung mit der Materialaustrittsöffnung gelangt, in welcher Stellung sie im allgemeinen durch einen Luftanschluß an der der Austrittsöffnung gegenüberliegenden Seite leergeblasen wird. Solche Maschinen und Vorrichtungen sind beispielsweise beschrieben in der DE-PS 501 941, der DE-AS 1 089 327, der DE-OS 1 756 085, der DE-PS 2 450 245, der US-PS 2 481 101 und der US-PS 3 076 580.

Alle diese Maschinen haben den Nachteil, daß daß der erhebliche Konstruktionsaufwand mit einem rotierenden Teil, dem zugehörigen Antriebsmotor und Getriebe sowie den für das rotierende Teil erforderlichen Abdichtmitteln nur für Maschinen ab einer bestimmten Durchsatzmenge wirtschaftlich gerechtfertigt ist. Gerade beim Spritzen von trockenem Beton bei kleineren Objekten in der Ausführung durch Handwerksbetriebe kommt es häufig vor, daß nur verhältnismäßig geringe Spritzleistungen erforderlich sind. Um solche Spritzleistungen mit den herkömmlichen Maschinen zu erreichen, reduzieren sich die Herstellungskosten keinesfalls im Verhältnis zur verlangten geringeren Fördermenge, so daß die hohen Anschaffungskosten solcher Maschinen ihre an sich wünschenswerte Anwendung für kleinere Betriebe und in den oben genannten Einsatzfällen oft ausschließen.

Aus der DE-AS 1 266 219 ist eine entsprechende Einschleusvorrichtung bekannt, die für solche verhältnismäßig geringen Durchsatzmengen geeignet ist. Diese Vorrichtung ist jedoch derart gestaltet, daß ein relativ großer Förderquerschnitt erforderlich ist, da das zu fördernde Material um einen Kernträger herum gefördert wird und die dazu notwendigen Druckluftbälge, die den Förderweg öffnen bzw. verschließen, einen entsprechenden, in Querrichtung dazu liegenden Funktionsweg benötigen.

Der Erfindung liegt daher die Aufgabe zugrunde, eine Einschleusvorrichtung der eingangs bezeichneten Art bzw. eine Spritzmaschine mit einer solchen Einschleusvorrichtung zur Verfügung zu stellen, die für geringe Durchsatzleistungen geeignet, entsprechend kostengünstig in der Herstellung und Anschaffung ist und einen möglichst geringen Folgebedarf an teuren Verschleißteilen hat.

Für die genannte Einschleusvorrichtung wird diese Aufgabe erfindungsgemäß durch die Merkmale des kennzeichnenden Teiles des Patentanspruches 1 gelöst.

Die Anordnung der einzelnen materialführenden Teile der Vorrichtung unmittelbar untereinander und die Ausbildung der Schleusenkammer-Absperrorgane als Schlauchquetscheinrichtungen ermöglicht einerseits die weitgehende Ausnutzung der Materialfortbewegung innerhalb der Vorrichtung durch freien Fall und erübrigt andererseits den Einsatz rotierend bewegter Teile mit den erforderlichen Abdichtmitteln und zugehörigen Rotationsantriebsaggregaten.

Dadurch, daß die Vorrichtung praktisch keine einem Verschleiß unterworfenen, bewegten Abdichtungsteile aufweist, bleibt sie solange gleichmäßig dicht und gestattet somit einen arbeitsplatz- und umweltfreundlichen Betrieb, bis einer der Schlauchabschnitte schadhaft wird. Ein langsam zunehmendes Undichtwerden tritt dabei aber nicht auf. Ist ein Schlauchabschnitt gebrochen, kann er mittels der verwendeten Verschraubungen schnell gewechselt werden. Da die erforderlichen verhältnismäßig kurzen Schlauchstücke keine hohen Kosten erfordern, können sie nach Erfahrung auch vorbeugend gewechselt werden.

Der Antrieb der Absperrorgane erfolgt zweckmäßigerweise durch pneumatische Arbeitszylinder. Diese sind einerseits wesentlich billiger als ein Motorantrieb mit Getriebe und können andererseits mit einer Energieform, nämlich Druckluft betrieben werden, die ohnehin für die Spritzförderleitung vorhanden sein muß, so daß sich eine zusätzliche elektrische Energieversorgung für die Vorrichtung erübrigt. Versuche haben gezeigt, daß die verwendeten Schlauchabschnitte trotz ständiger Belastung durch die Schlauchquetscheinrichtungen verhältnismäßig hohe Standzeiten erreichen. Außerdem läßt sich die Vorrichtung durch Verwendung handelsüblicher Schlauchverschraubungen derart ausbilden, daß die Schlauchabschnitte auf einfache Weise und schnell ausgetauscht werden können.

Vorzugsweise ist die Vorrichtung so ausgebildet, daß die materialführenden Teile von dem Austrittsquerschnitt der Materialzuführeinrichtung an bis zum Anschlußstutzen an die Spritzförderleitung bei geöffneten Absperrorganen durchgehend den gleichen Innendurchmesser aufweisen, so daß gerade bei Materialfortbewegung unter Mitverwendung der Schwerkraft ein ungehinderter Materialvorschub erfolgen kann.

Da die Schlauchabschnitte für ihre Verformbarkeit durch die Schlauchquetscheinrichtungen eine gewisse Mindestlänge aufweisen müssen, besteht die Schleusenkammer zweckmäßigerweise zum größten Teil aus Bereichen der beiden Schlauchabschnitte, nämlich denjenigen Bereichen unterhalb der oberen Schlauchquetscheinrichtung und oberhalb der unteren Schlauchquetscheinrichtung, und aus einem verhältnismäßig kurzen Zwischenstück, welches die beiden Schlauchabschnitte miteinander verbindet und zweckmäßigerweise mit den Gegenstücken für die Schlauchverschraubung versehen ist.

In besonders bevorzugter Ausführungsform weist die erfindungsgemäße Vorrichtung zusätzlich einen Absperrschieber auf, der oberhalb des oberen Schlauchabschnittes zweckmäßigerweise etwa im Austrittsquerschnitt der Materialzuführeinrichtung angeordnet ist. Durch den Bereich zwischen diesem Absperrschieber und der oberen Schlauchquetscheinrichtung wird eine Vorkammer gebildet.

Der Arbeitsablauf ist derart, daß bei geschlossener oberer Schlauchquetscheinrichtung und geöffnetem Absperrschieber die Vorkammer durch freie Fallbewegung des Materials aus der Materialzuführeinrichtung gefüllt wird. Gleichzeitig kann die unterhalb der oberen Schlauchquetscheinrichtung befindliche Schleusenkammer durch Öffnen der unteren Schlauchquetscheinrichtung entleert werden. Bevor jedoch die obere Schlauchquetscheinrichtung zum Befüllen der Schleusenkammer geöffnet wird, wird der Absperrschieber geschlossen, so daß lediglich die Materialmenge aus der Vorkammer in die Schleusenkammer gelangen kann. Unter der vorzugsweise vorgesehenen Voraussetzung, daß die Schleusenkammer immer ein größeres Volumen aufweist als die Vorkammer, und das aus der Schleusenkammer in die Spritzförderleitung entlassene Material keinen Rückstau bildet, arbeiten die Schlauchquetscheinrichtungen bei ihrer Schließbewegung grundsätzlich gegen einen leeren Schlauch. Hierdurch wird erreicht, daß die Schlauchquetscheinrichtungen zuverlässig und mit ausreichender Abdichtung des Schlauches arbeiten, und daß ein Verschleiß des Schlauches durch Fördermaterial im Bereich der Quetscheinrichtungen bei deren Schließen vermieden wird. Das einzige gegen Material arbeitende Absperrorgan ist der Absperrschieber im Austrittsquerschnitt der Materialzuführeinrichtung. Im Vergleich mit der Vielzahl gegen Material bewegter Konstruktionsteile bei herkömmlichen Vorrichtungen sind bei der erfindungsgemäßen Vorrichtung solche Teile auf die Mindestanzahl reduziert worden. Der Absperrschieber kann mit einer Hartmetallkante und auch im übrigen konstruktiv so ausgebildet werden, daß er den Verschleißbedingungen gerecht wird. Andererseits wird das Arbeitsverhalten der Vorrichtung noch nicht dadurch gestört, daß der Absperrschieber gelegentlich einmal nicht vollständig schließt.

Um die jeweils der Schleusenkammer zugeführte Füllmenge einstellen zu können, ist die obere Schlauchquetscheinrichtung vorzugsweise höhenverstellbar im Verhältnis zum oberen Schlauchabschnitt ausgebildet. Hierdurch wird das Volumen der Vorkammer verändert. Es ist jedoch darauf zu achten, daß auch bei größter Vorkammereinstellung das dadurch reduzierte Volumen der Schleusenkammer immer noch größer bleibt als das Volumen der Vorkammer.

In weiter bevorzugter Ausführungsform der Vorrichtung ist die Schleusenkammer mit einem Luftanschluß versehen, der zweckmäßigerweise an dem Zwischenstück angebracht ist. Zwar könnte es sein, daß die Schleusenkammer sich bei geöffneter unterer Schlauchquetscheinrichtung durch die Schwerkraft des Materials und den gewissen Sog, den die pneumatische Spritzförderleitung ausübt, auch von alleine entleert, bei kurzen Taktzeiten der Vorrichtung können jedoch Entleerungsprobleme der Schleusenkammer dadurch auftreten, daß nicht genügend schnell Luft in den zu entleerenden Raum nachströmen kann. Es ist daher vorzugsweise ein Luftzufuhrstutzen an der Schleusenkammer vorgesehen, über den während des Entleerungsvorganges die Blasluft für die Blasleitung umgeleitet werden kann. Erfahrungen haben ergeben, daß es dabei nicht darauf ankommt, daß der Luftanschluß im oberen Bereich der Schleusenkammer angeordnet ist. Die etwa mittlere seitliche Anordnung am Zwischenstück, welche ein problematisches Einführen des Luftanschlusses in einen der Schlauchabschnitte vermeidet, hat sich als ebenso wirksam erwiesen.

Gemäß der vorliegenden Erfindung wird der mit steuerbaren Ventilmitteln versehene Luftanschluß vorteilhafterweise in mehrfacher Funktion verwendet. So wird er durch die Ventilmittel beim Befüllen der Schleusenkammer als Entlüftungsstutzen geschaltet, während er für das Entleeren der Schleusenkammer mit der Blasluft verbunden wird.

Ein Problem bei allen herkömmlichen Spritzmaschinen für das Spritzen von trockenen Betonmischungen ist die Staubentwicklung infolge nicht vollständig beherrschbarer Maschinenabdichtungen. Bei der vorliegenden Vorrichtung wäre die einzige Öffnung zur Umgebung der Luftanschluß an der Schleusenkammer, wenn er unmittelbar vor dem Befüllen der Schleusenkammer zum Abbau des in dieser anstehenden Staudruckes der Förderluft auf Entlüftung nach außen umgestellt wird. Dabei werden Reste staubförmigen Materials aus der Schleusenkammer abgeblasen. Um einen Staubaustritt hier weitgehend vollständig zu vermeiden, ist in bevorzugter Ausführung in den Luftanschluß ein Staubfilterelement eingebaut. Durch die doppelte Funktion des Luftanschlusses wird dieses Staubfilterelement, wenn es sich beim Befüllen der Schleusenkammer mit einer bestimmten Staubmenge belegt hat, beim nachfolgenden Entleeren der Schleusenkammer durch die eintretende Ausblasluft wieder freigeblasen. Auf diese Weise bleibt das Filterelement lange Zeit wartungsfrei. Da zweckmäßigerweise handelsübliche Filterpatronen Verwendung finden, können sie bei Unbrauchbarwerden nach längerer Zeit problemlos ausgewechselt werden. Die erfindungsgemäße Vorrichtung gestattet daher einen äußerst umweltfreundlichen Betrieb, der mit einfachsten Mitteln erreicht wird.

Beim Arbeiten mit kurzen Taktzeiten kann es vorkommen, daß eine einfache Entlüftung der Schleusenkammer über den Strömungswiderstand des Filters nicht ausreicht, um das Material aus der Vorkammer schnell genug in die Schleusenkammer nachrutschen zu lassen. Zweckmäßigerweise wird daher der Luftanschluß während dieses Vorganges kurz mit Unterdruck beaufschlagt. Hierfür kann eine entsprechende Saugeinrichtung an der Vorrichtung vorgesehen werden, die selbst mit Druckluft betrieben wird.

Wie bereits erwähnt, sind die Betätigungsmittel für die Schlauchquetscheinrichtungen wie auch für den Absperrschieber zweckmäßigerweise als pneumatische Arbeitszylinder ausgebildet. Um einen reibungslosen Arbeitsablauf der Vorrichtung zu gewährleisten, ist eine pneumatische Taktsteuereinrichtung vorgesehen, die die Betätigungsfolge der einzelnen Betätigungsorgane und Funktionen steuert. Diese Betätigungsfolge hat zweckmäßigerweise folgenden Ablauf: Ausgehend von einem gleichzeitigen Schließzustand aller drei Elemente öffnet beispielsweise zuerst die obere Schlauchquetscheinrichtung und schließt wieder. Erst wenn sie ihren Schließzustand wieder erreicht hat, öffnen der Absperrschieber und die untere Schlauchquetscheinrichtung. Erst wenn diese beide wieder ihren Schließzustand erreicht haben, öffnet wieder die obere Schlauchquetscheinrichtung usw.. Gleichzeitig damit ist auch die Ventileinrichtung zu steuern. Sie wird auf Blasluftanschluß umgeschaltet, wenn die untere Schlauchquetscheinrichtung öffnet, und nach einer gewissen Schließzeit auf Entlüftung bzw. Saugen, wenn die untere Schlauchquetscheinrichtung wieder geschlossen ist. Je nach der Taktgeschwindigkeit der Vorrichtung kann es zweckmäßig sein, daß die Schleusenkammer nur dann entlüftet bzw. an Unterdruck gelegt wird, wenn der Absperrschieber geschlossen und die obere Schlauchquetscheinrichtung geöffnet ist. Solche Steuerabläufe können durch dem Fachmann bekannte Mittel erreicht werden. Bei bevorzugter Ausführungsform gemäß der Erfindung sind jedoch pneumatische Steuerendschalter an der Vorrichtung vorgesehen, die den getakteten Arbeitsablauf automatisch ablaufen lassen, so daß zum Inbetriebnehmen der Vorrichtung lediglich die Luftzufuhr geöffnet werden muß. Diese pneumatischen Steuerschalter sind derart angeordnet, daß sie von Teilen der Absperrorgane bzw. deren Arbeitszylindern direkt berührt werden. Erreicht z.B. die obere Schlauchquetscheinrichtung ihre Schließstellung, wird hierdurch ein solcher Steuerschalter betätigt, der die Luftzufuhr zu den Zylindern der unteren Schlauchquetscheinrichtung und des Absperrschiebers einleitet. Erreichen diese Organe ihre voll geöffnete Stellung, können sie Schalter berühren, die ihre Umsteuerung in eine Schließbewegung auslösen. Nach Erreichen der Schließstellung betätigen sie wiederum pneumatische Schalter, die erneut den Öffnungsvorgang der oberen Schlauchquetscheinrichtung einleiten. Die hierfür verantwortlichen Steuerschalter können in UND-Schaltung hintereinandergeschaltet sein, um sicherzustellen, daß die obere Schlauchquetscheinrichtung erst öffnet, wenn die beiden anderen Organe ihre Schließstellung erreicht haben. Selbstverständlich sind auch andere Steuerungsmittel zum Betrieb der Vorrichtung möglich, die rein pneumatische Ausführung hat jedoch den Vorteil, daß keine weiteren Energieversorgungsanschlüsse benötigt werden.

Die Schlauchquetscheinrichtungen bestehen zweckmäßigerweise zwecks Schonung des Schlauches aus abgerundeten, länglichen Quetschelementen, die parallel zueinander zu beiden Seiten des Schlauches angeordnet sind. Eines dieser Quetschelemente ist über ein gabelförmiges Gestänge mit dem Gehäuse des zugehörigen Arbeitszylinders verbunden, während das andere mit der Kolbenstange verbunden ist. Bei stationär angeordnetem Zylindergehäuse würde nur das mit der Kolbenstange verbundene Quetschelement bewegt werden, und der Schlauch würde lediglich von einer Seite aus gegen das andere, stationäre Quetschelement zusammengedrückt werden. Um die Beanspruchung des Schlauches symmetrisch zu gestalten, sind die Gehäuse der pneumatischen Arbeitszylinder der Schlauchquetscheinrichtungen daher mit gewissem axialen Bewegungsspiel in der Vorrichtung gelagert. Beim Schließen der Quetscheinrichtung stellt sich das Gehäuse des Zylinders von alleine auf die Schließstellung ein. Beim Öffnen wird das Zylindergehäuse durch einen (nicht dargestellten) Anschlag bis zu seiner Ausgangsstellung zurückbewegt. Dadurch wird der Schlauch beim Öffnen nicht behindert.

Es gibt Anwendungsbereiche für die erfindungsgemäße Vorrichtung, bei denen eine möglichst weitgehende Kontinuität der in die Blasleitung eingeschleusten Materialchargen nicht von Belang ist. So ist es beispielsweise bei Metallschmelzanlagen üblich und erforderlich, die von den Abgasfilteranlagen zurückgehaltenen Feststoffe wieder in die Schmelze zurückzuführen. Dies geschieht durch einen Trägergasstrom. Da die anfallenden Mengen hier gering sind und, wie erwähnt, eine kontinuierliche Förderung nicht von Belang ist, ist die erfindungsgemäße Einschleusvorrichtung in Einzelausführung für diese Aufgabe geeignet.

Die Kontinuität der Materialförderung in der Blasleitung läßt sich dadurch verbessern, daß die allgemein horizontal verlaufende Blasleitung an der der Blasrichtung entgegengesetzten Seite des Anschlußstutzens mit einem gewissen Totraum versehen wird, dessen Volumen in der Größenordnung einer halben Schleusenkammerfüllung liegt. Wenn die Schleusenkammerfüllung, unterstützt durch Blasluft, nach unten in die Blasleitung gelangt, gelangt ein Teil des Materials von alleine durch den Aufprall in der Blasleitung auch in den Totraum. Nach Schließen der unteren Schlauchquetscheinrichtung und Rückschalten der Blasluft auf die Blasleitung wird das Material aus dem Totraum in die Blasleitung gefördert.

Bei Betonspritzmaschinen ist dagegen eine noch stärker vergleichmäßigte Einschleusung erwünscht. Erfindungsgemäß weist daher eine solche Maschine vorzugsweise zwei oder auch noch mehrere der erfindungsgemäßen Einschleusvorrichtungen auf. Sind zwei Vorrichtungen vorgesehen, die in die gleiche Spritzleitung fördern, so erfolgt die Taktsteuerung beider Vorrichtungen zweckmäßigerweise im Wechselrhythmus. Da sich die Bauanordnung der beschriebenen Einschleusvorrichtung sehr schlank ausführen läßt, können zwei dieser Vorrichtungen dicht nebeneinander angeordnet und einem gemeinsamen Aufgabetrichter für das Material zugeordnet werden.

Will man bei einer Doppelanordnung den Effekt eines Totraumes in der Blasleitung zusätzlich ausnutzen, so muß für jede Einschleusvorrichtung ein getrennter Blasleitungsabschnitt mit zugehörigem Totraum vorgesehen werden. Die beiden Blasleitungsabschnitte können dann in Form eines Hosenrohres zu einer Blasleitung zusammengeführt werden. Bei einer Maschine mit Doppelanordnung und jeweils verzögerter Einführung eines Teiles des Chargenvolumens jeder Vorrichtung in die Blasleitung können somit bei einem vollen Arbeitszyklus der Gesamtvorrichtung vier Materialschübe in die gemeinsame Blasleitung eingeführt werden, was zu einer verhältnismäßig kontinuierlichen Förderung führt.

Für ein störungsfreies Befüllen der Vorkammern einer Doppelanordnung aus der Materialzuführeinrichtung hat es sich als zweckmäßig erwiesen, die Vorkammern unterhalb der Absperrschieber zusätzlich durch eine Luftüberströmleitung miteinander zu verbinden.

Für die Verwendung als Betonspritzmaschine wird ein solches Aggregat zweckmäßigerweise als fahrbare Einheit ausgeführt, die sich leicht von Hand bewegen läßt, und die nichts weiter als einen Druckluftanschluß für ihren Betrieb erfordert. Die Bauhöhe läßt sich dabei so tief halten, daß selbst von Hand Gebinde mit dem zu spritzenden Material in den Aufgabetrichter entleert werden können.

Im folgenden wird die Erfindung unter Hinweis auf die beigefügten lediglich schematischen Zeichnungen im einzelnen noch näher veranschaulicht. In den Zeichnungen stellen dar:

Fig. 1     den schematischen Aufbau einer Einschleusvorrichtung in Seitenansicht,

Fig. 2     eine schematische Draufsicht auf den Materialaufgabetrichter für zwei parallel arbeitende Einschleusvorrichtungen, und

Fig. 3     die Veranschaulichung von vier aufeinanderfolgenden Betriebszuständen für zwei parallel arbeitende Einschleusvorrichtungen.

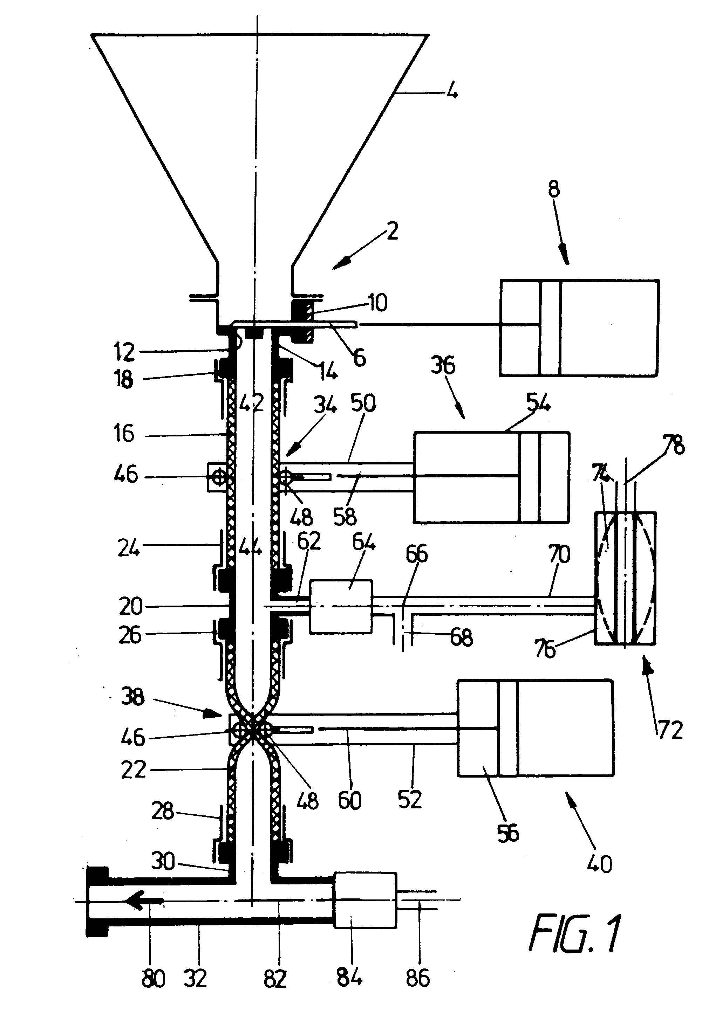

Die in Figur 1 in schematischer Seitenansicht dargestellte Einschleusvorrichtung weist eine Materialzuführeinrichtung 2 mit einem Materialaufgabetrichter 4 auf, der an seinem unteren Ende durch einen Absperrschieber 6 verschließbar ist, welcher mit einem pneumatischen Arbeitszylinder 8 als Betätigungsmittel versehen ist. Über eine Dichtanordnung 10 tritt der Absperrschieber 6 in das untere Ende des Aufgabetrichters 4 ein und kann somit den Austrittsquerschnitt 12 der Materialzuführeinrichtung 2 verschließen. Mittels eines Rohrstutzens 14 als Übergangsstück schließt sich unten an die Materialzuführeinrichtung 2 ein erster oberer Schlauchabschnitt 16 an, der mittels einer bekannten, lösbaren Schlauchanschlußverschraubung 18 mit dem Übergangsstück 14 verbunden ist. An das untere Ende des Schlauchabschnittes 16 schließt sich ein Zwischenstück 20 an, auf das ein zweiter, unterer Schlauchabschnitt 22 folgt, der in etwa die gleichen Abmessungen wie der obere Schlauchabschnitt 16 aufweist. Beide Schlauchabschnitte 16 und 22 sind mit dem Zwischenstück, welches wie die Materialzuführeinrichtung gestellfest angeordnet ist, über Schlauchanschlußverschraubungen 24 und 26 verbunden. Das untere Ende des unteren Schlauchabschnittes 16 ist schließlich über eine Schlauchanschlußverschraubung 28 mit einem Anschlußstutzen 30 verbunden, der in eine pneumatische Spritzförderleitung 32 mündet.

Etwa in der Mitte des oberen Schlauchabschnittes 16 ist eine erste, obere Schlauchquetscheinrichtung 34 vorgesehen, die mittels eines pneumatischen Arbeitszylinders 36 betätigbar ist. Entsprechend ist etwa in der Mitte des unteren Schlauchabschnittes 22 eine zweite, untere Einrichtung 38 vorgesehen, die mittels eines pneumatischen Arbeitszylinders 40 betätigbar ist.

Der zwischen dem Absperrschieber 6 und der oberen Schlauchquetscheinrichtung 34 liegende Innenraum des Rohrstutzens 14 und des oberen Schlauchabschnittes 16 bildet eine Vorkammer 42. Der zwischen der oberen Schlauchquetscheinrichtung 34 und der unteren Schlauchquetscheinrichtung 38 liegende Innenraum der Schlauchabschnitte 16 und 22 sowie des Zwischenstückes 20 bildet eine Schleusenkammer 44.

Die Schlauchquetscheinrichtungen 34 und 38 weisen je zwei längliche und abgerundete Quetschelemente 46 und 48 auf. Die Quetschelemente 46 sind über Gabelarmpaare 50 bzw. 52 mit den Gehäusen 54 bzw. 56 der Arbeitszylinder 36 bzw. 40 verbunden, während die Quetschelemente 48 mit den Kolbenstangen 58 bzw. 60 der Arbeitszylinder 36 bzw. 40 verbunden sind. Um eine symmetrische Schließbewegung der Schlauchquetscheinrichtungen zu gestatten, wie dies am Beispiel der unteren Schlauchquetscheinrichtung 38 in Figur 1 dargestellt ist, sind die Gehäuse 54 und 56 der Arbeitszylinder 36 und 40 axial verschiebbar im (nicht dargestellten) Rahmen der Vorrichtung gelagert.

Die Schleusenkammer 44 ist am Zwischenstück 20 mit einem Luftanschluß 62 versehen, in dem ein Staubfilterelement 64 angeordnet ist, welches bei Entlüften der Schleusenkammer zum Abbau des Staudruckes unmittelbar vor deren Befüllen mitgerissenen Staub zurückhält und somit eine Umweltbelästigung vermeidet. Die Rückhaltefunktion des Filters tritt auch ein, wenn der Luftanschluß mit dem Sauganschluß verbunden wird.

Im Punkt 66 ist die Luftanschlußleitung 62 mit einem Blasluftanschluß 68 und einem Vakuumbzw. Sauganschluß 70 versehen. Im Punkt 66 sind (nicht dargestellte) Umschaltventile, vorzugsweise Dreiwegeventile, angeordnet, mit denen sich der Luftanschluß 62 wahlweise verschließen, entlüften oder auf den Blasluftanschluß 68 oder den Sauganschluß 70 schalten läßt.

Mit 72 ist eine mit dem Sauganschluß 70 verbundene Einrichtung zum kurzzeitigen Erzeugen eines Unterdruckes bezeichnet. Die Unterdruckeinrichtung besteht aus einem gegen seine elastische Materialrückstellkraft mittels Druckluft aufblasbaren Körper 74, der in einem mit der Saugleitung 70 verbundenen und mit einem (nicht gezeigten) Entlüftungsanschluß versehen, geschlossenen Gehäuse 76 angeordnet ist. Der Körper 74 wird bei entlüftetem Gehäuse 76 über einen Aufblasanschluß 78 aufgeblasen, worauf das Gehäuse 76 verschlossen wird. Wird dann bei Erfordernis der Aufblasanschluß 78 zur Umgebung geöffnet, zieht sich der Körper 74 unter seiner Eigenelastizität zusammen und erzeugt im Gehäuse 76 bzw. im Sauganschluß 70 einen Unterdruck. Die Volumenänderung des Körpers 74 ist auf das erforderliche Ansaugvolumen aus der Schleusenkammer 44 abgestimmt.

Wie sich aus Fig. 1 ergibt, ist die Förderleitung 32 an der der Förderrichtung 80 entgegengesetzten Seite des Anschlußstutzens 30 mit einem Totraum 82 versehen, der über ein Filterelement 84 mit einem Blasluftanschluß 86 verbunden ist.

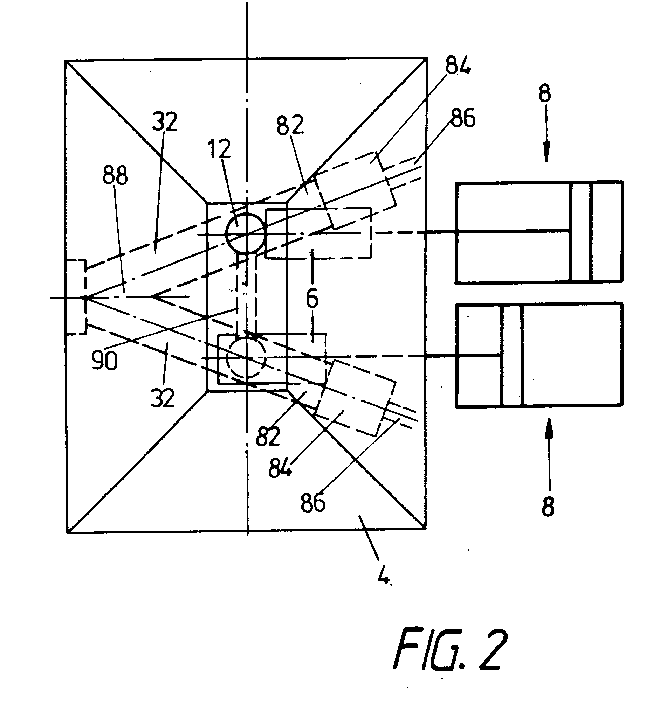

Die Fig. 2 stellt eine schematische Draufsicht auf eine Spritzmaschine mit zwei nebeneinander angeordneten Einschleusvorrichtungen dar, die von einem gemeinsamen Materialzuführtrichter 4 gespeist werden. Angedeutet sind die beiden Absperrschieber 6 und die zugehörigen Arbeitszylinder 8. Zu erkennen ist auch, daß jede der beiden Vorrichtungen mit einem eigenen Förderleitungsabschnitt 32 versehen ist, und daß diese beiden Förderleitungsabschnitte über ein Hosenrohr 88 zu einer gemeinsamen Förderleitung zusmamengeführt sind. Die Vorkammern 42 sind unterhalb der Absperrschieber durch eine Überströmleitung 90 miteinander verbunden.

Für die Schlauchabschnitte 16 und 22 haben sich armierte Druckschläuche bewährt, wie sie auch allgemein als Schlauchleitung beim Betonspritzen Verwendung finden. Es handelt sich dabei um Schläuche, die eine Kunstfaserbewehrung aufweisen, die sich nahe der Peripherie des Schlauches befindet, während der Innenbereich des Schlauches eine verhältnismäßig dicke, verformbare Elastomerschicht aufweist, die beim verwendeten Schlauch eine Dicke von etwa 7 mm aufweist. Durch diese dicke, verformbare Innenschicht erfährt die Bewehrung des Schlauches auch im zusammengequetschten Zustand an den Seiten nur eine Krümmung, deren Krümmungsradius bei 5 bis 10 mm liegt. Eingesetzt wurden Schläuche im Durchmesserbereich von etwa 70 mm Außendurchmesser.

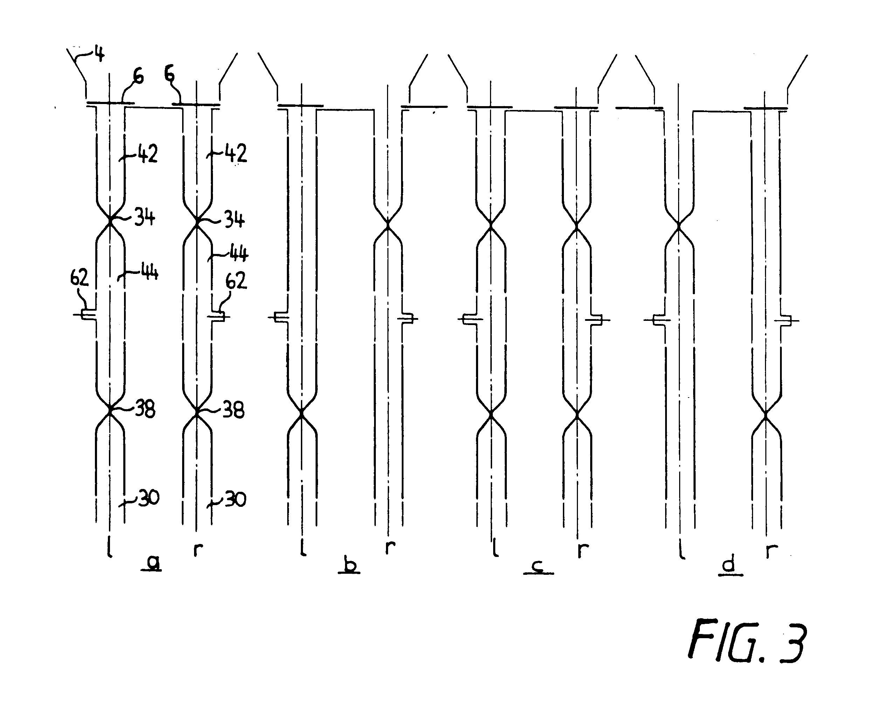

Der Arbeitsablauf einer Spritzmaschine mit zwei parallelen und im Wechselspiel arbeitenden Einschleusvorrichtungen soll noch kurz anhand der schematischen Darstellung der Figur 3 erläutert werden, in der vier aufeinanderfolgende Betriebszustände a, b, c und d für jeweils die linke Einschleusvorrichtung 1 und die rechte Einschleusvorrichtung r dargestellt sind. Es sei zuerst jeweils nur die linke Einschleusvorrichtung 1 betrachtet. Im Zustand a befinden sich sowohl der Absperrschieber 6 wie auch die Schlauchquetscheinrichtungen 34 und 38 in Schließposition. Es wird davon ausgegangen, daß der Absperrschieber 6 und die untere Schlauchquetscheinrichtung 38 gerade geschlossen haben. Die Vorkammer 42 ist mit Material gefüllt worden, die Schleusenkammer 44 nach unten entleert worden. Jetzt öffnet die obere Schlauchquetscheinrichtung 34 (Zustand b) und das Material aus der Vorkammer 42 fällt in die Schleusenkammer 44. Die obere Schlauchquetscheinrichtung 34 schließt wieder (Zustand c), und wenn sie geschlossen ist, öffnen der Absperrschieber 6 und die untere Schlauchquetscheinrichtung 38 (Zustand d). Die Schleusenkammer 44 wird dabei nach unten in den Anschlußstutzen 30 entleert und die Vorkammer 42 wiederum aus dem Aufgabetrichter 4 befüllt. Danach schließen Absperrschieber 6 und untere Schlauchquetscheinrichtung 38 wieder und es ergibt sich der Zustand a, aus dem heraus der gleiche Ablauf erneut beginnt. Der Ablauf der rechten Einschleusvorrichtung r ist jeweils um zwei dargestellte Positionen phasenverschoben. Der Zustand a der rechten Vorrichtung entspricht dem Zustand c der linken Vorrichtung. Ansonsten ist der Ablauf der gleiche. Während in Position b die rechte Schleusenkammer 44 in den Anschlußstutzen 30 entleert wird, wird in Position d die linke Schleusenkammer 44 in den Anschlußstutzen entleert, so daß zwischen den Zuständen, in denen die Absperrorgane beider Vorrichtungen sämtlich geschlossen sind (Zustände a und c) jeweils abwechselnd die eine und die andere Vorrichtung ihr Material in die Förderleitung abgeben.

Die Steuerung des Luftanschlusses 62 mittels der Ventileinrichtung 66 erfolgt bei einer Ausführungsform einer Einschleuseinrichtung, wie sie in Fig. 1 dargestellt ist, zweckmäßigerweise derart, daß die Blasluft bei beginnender Öffnung der unteren Schlauchquetscheinrichtung 38 vom Blasluftanschluß 86 an der Förderleitung 32 ganz auf den Blasluftanschluß 68 am Luftanschluß 62 umgeschaltet wird, um den Inhalt der Schleusenkammer 44 in die Förderleitung 32 auszublasen. Wird gleichzeitig der Blasluftanschluß 86 an der Förderleitung 32 auf Entlüften geschaltet, so wird das Fördermaterial teilweise in den Totraum 82 geblasen, wobei ein Teil der Blasluft über den Filter 84 und den Blasluftanschluß 86 ins Freie entweicht. Kurz bevor die untere Schlauchquetscheinrichtung 38 wieder den Schließzustand erreicht, wird die Blasluft vom Blasluftanschluß 68 am Luftanschluß 62 wieder auf den Blasluftanschluß 86 an der Förderleitung 32 umgeschaltet. Dadurch wird nunmehr verzögert der im Totraum 82 befindliche Materialanteil in die Förderleitung 32 geblasen, wobei das Filter 84, durch welches beim Füllen des Totraumes 82 Material zurückgehalten wurde, gleichzeitig in die Förderleitung 32 hinein freigeblasen wird.

Hat die untere Schlauchquetscheinrichtung 38 vollständig geschlossen, wird der Luftanschluß 62 an der Schleusenkammer 44 auf Entlüften umgeschaltet, um über das Filter 64 bereits etwaigen Überdruck aus der Schleusenkammer entweichen zu lassen. Wird mit einer Unterdruckeinrichtung 72 gearbeitet, wie sie in Fig. 1 angedeutet ist, kann gleichzeitig der elastische Körper 74 aufgeblasen werden. Sobald die obere Schlauchquetscheinrichtung öffnet, wird der Luftanschluß 62 aus seiner Entlüftungsstellung auf den Sauganschluß 70 umgeschaltet, wobei gleichzeitig der Aufblasanschluß 78 der Unterdruckeinrichtung 72 entlüftet wird.

Bei einer Doppelanordnung der Vorrichtung mit einem Hosenrohr 88 gemäß Fig. 2 ist es vorteilhaft, die Blasluft jeweils nur auf den Blasluftanschluß 86 derjenigen Vorrichtung zu schalten, die sich in der Entleerungsphase der Schleusenkammer 44 befindet. Das Umschalten kann beispielsweise während der Zustände a) und c) in Fig. 3 erfolgen.

Wie bereits erwähnt, kann die gesamte pneumatische Ablaufsteuerung der Vorrichtung weitgehend durch pneumatische Endschalter erfolgen, die von den einzelnen Absperrorganen oder deren Betätigungszylindern in deren Endstellungen jeweils ausgelöst werden. Um bei der Bewegungsumkehr der Schlauchquetscheinrichtungen gewisse Totzeiten zu erhalten, während derer die Luftwegumsteuerungen und die Materialbewegungen stattfinden können, kann beispielsweise der Absperrschieber jeweils verzögert in seine und aus seinen Endstellungen bewegt werden, so daß die von ihm betätigten Endschalter als quasi übergeordnete Steuerschalter die nächste Taktphase der Vorrichtung erst verzögert wieder auslösen.

Bei einem Prototyp einer Betonspritzmaschine mit zwei parallelen Einschleusvorrichtungen wurde Schlauchmaterial mit einem Innendurchmesser von 50 mm verwendet. Das Füllvolumen je Takt betrug etwa 0,55 1. Bei etwa 30 Ausschleusvorgängen der Doppelvorrichtung pro Minute konnte eine Fördermenge von etwa 1 $m^3$/h erreicht werden. Die Taktzeit der Doppelvorrichtung beträgt etwa 2 sec, die jedes einzelnen Teiles etwa 4 sec.

Die Tatsache, daß maßgebliche Bereiche der Einschleusvorrichtung aus Schlauchabschnitten bestehen, und diese Schlauchabschnitte periodisch mittels der Schlauchquetscheinrichtungen verformt werden, trägt dazu bei, daß Materialstau in der Vorrichtung durch Brückenbildung und Anhaften an den Kammerwänden vermieden wird.

**Patentansprüche**

1. Einschleusvorrichtung für im wesentlichen trockenkörnige, schüttfähige Materialien, insbesondere für im wesentlichen trockenes Betongemisch und ähnliche Baustoffe, in eine pneumatische Spritzförderleitung mit einer Materialzuführeinrichtung (2), einer Schleusenkammer (44) und einem Anschlußstutzen (30) für den Anschluß an die pneumatische Spritzförderleitung (32), wobei die Materialzuführeinrichtung (2), die Schleusenkammer (44) und der Anschlußstutzen (30) relativ zueinander stationär ausgebildet und allgemein übereinander angeordnet sind und zwischen der Materialzuführeinrichtung (2) und der Schleusenkammer (44) ein Eintrittsabsperrorgan (34) und zwischen der Schleusenkammer (44) und dem Anschlußstutzen (30) für die pneumatische Spritzförderleitung (32) ein Austrittsabsperrorgan (38) vorgesehen sind, dadurch gekennzeichnet, daß zumindest die Übergangsbereiche zwischen Materialzuführeinrichtung (2) und Schleusenkammer (44) sowie zwischen Schleusenkammer (44) und Anschlußstutzen (30) aus einem oberen (16) und einem unteren (22) Abschnitt eines flexiblen Schlauches bestehen und daß die Absperrorgane als eine obere (34) und eine untere (38) Schlauchquetscheinrichtung mit steuerbarem Betätigungsmittel (36, 40) ausgebildet sind, die an den Schlauchabschnitten (16, 22) angreifen.

2. Vorrichtung nach Anspruch 1, dadurch gekennzeichnet, daß der Innendurchmesser der Schleusenkammer (44) dem Innendurchmesser der Schlauchabschnitte (16, 22) entspricht und daß die Schleusenkammer (44) durch den unterhalb der oberen Schlauchquetscheinrichtung (34) befindlichen Bereich des oberen Schlauchabschnittes (16), den oberhalb der unteren Schlauchquetscheinrichtung (38) befindlichen Bereich des unteren Schlauchabschnittes (22) und ein die Schlauchabschnitte (16, 22) verbindendes Zwischenstück (20) gebildet ist.

3. Vorrichtung nach Anspruch 1 und/oder 2, dadurch gekennzeichnet, daß die Materialzuführeinrichtung (2) mit einem oberhalb des oberen Schlauchabschnittes (16) angeordneten Absperrschieber (6) mit steuerbarem Betätigungsmittel (8) versehen ist, wodurch zwischen diesem Absperrschieber (6) und der oberen Schlauchquetscheinrichtung (34) eine Vorkammer (42) gebildet wird.

4. Vorrichtung nach Anspruch 3, dadurch gekennzeichnet, daß die obere Schlauchquetscheinrichtung (34) zur Veränderung des Volumens der Vorkammer (42) relativ zum oberen Schlauchabschnitt (16) höhenverstellbar ist.

5. Vorrichtung nach einem oder mehreren der Ansprüche 1-4, dadurch gekennzeichnet, daß die Schleusenkammer (44) mit einem Luftanschluß (62) versehen ist, welcher mit einer steuerbaren Ventileinrichtung (66) verbunden ist, die diesen wechselweise mit einer Luftzuführleitung (68), einem Ausblasstutzen oder einem Sauganschluß (70) verbindet.

6. Vorrichtung nach Anspruch 5, dadurch gekennzeichnet, daß zwischen Luftanschluß (62) und Ventileinrichtung (66) ein Staubfilter (64) in der Leitung angeordnet ist.

7. Vorrichtung nach einem oder mehreren der Ansprüche 3-6, dadurch gekennzeichnet, daß die Betätigungsmittel (8, 36, 40) für die Schlauchquetscheinrichtungen (34, 38) und den Absperrschieber (6) mit einer Taktsteuereinrichtung versehen sind, die derart geschaltet ist, daß die obere Schlauchquetscheinrichtung (34) öffnet und schließt, wenn die untere Schlauchquetscheinrichtung (38) und der Absperrschieber (6) geschlossen sind, und der Absperrschieber (6) und die untere Schlauchquetscheinrichtung (38) öffnen und schließen, während die obere Schlauchquetscheinrichtung (34) geschlossen ist.

8. Vorrichtung nach Anspruch 7, dadurch gekennzeichnet, daß die Blasluft während der Öffnungsphase der unteren Schlauchquetscheinrichtung (38) auf die Luftzuführleitung (68) des Luftanschlusses (62) der Schleusenkammer (44) umschaltbar ist.

9. Vorrichtung nach Anspruch 7 oder 8, dadurch gekennzeichnet, daß der Luftanschluß (62) der Schleusenkammer (44) während der Öffnungsphase der oberen Schlauchquetscheinrichtung (34) mit dem Sauganschluß (70) verbindbar ist.

10. Vorrichtung nach einem oder mehreren der Ansprüche 1-9, dadurch gekennzeichnet, daß die Förderleitung (32) an ihrer der Förderrichtung entgegengesetzten Seite des Anschlußstutzens (30) mit einem Totraum (82) versehen ist, dessen Volumen kleiner als das Volumen der Schleusenkammer (44) ist, und der mit einem gegebenenfalls ein Filterelement (84) aufweisenden Blasluftanschluß (86) versehen ist.

11. Vorrichtung nach einem oder mehreren der Ansprüche 7-10, dadurch gekennzeichnet, daß die Betätigungsmittel pneumatische Arbeitszylinder (8, 36, 40) sind, und die Taktsteuereinrichtung pneumatische Endschalter aufweist, die unmittelbar von den Schlauchquetscheinrichtungen (34, 38) bzw. dem Absperrschieber (6) bzw. deren Arbeitszylindern (8, 36, 40) betätigt werden.

12. Vorrichtung nach einem oder mehreren der Ansprüche 1-11, dadurch gekennzeichnet, daß jede der Schlauchquetscheinrichtungen (34, 38) zwei beidseitig des Schlauchabschnittes (16, 22) angeordnete, im wesentlichen parallele, stabförmige Quetschelemente (46, 48) aufweist, von denen das eine (48) mit der Kolbenstange (58, 60) und das andere (46) mit dem Zylindergehäuse (54, 56) eines pneumatischen Arbeitszylinders (36, 40) verbunden ist.

13. Vorrichtung nach Anspruch 12, dadurch gekennzeichnet, daß für eine symmetrische Öffnungs- und Schließbewegung jeder Schlauchquetscheinrichtung (34, 38) das Zylindergehäuse (54, 56) des zugehörigen Arbeitszylinders (36, 40) mit entsprechend axialem Bewegungsspiel in der Vorrichtung gelagert ist.

14. Spritzmaschine für im wesentlichen trockene Betonmischungen oder ähnliche Baustoffe, dadurch gekennzeichnet, daß sie eine oder mehrere, vorzugsweise zwei Einschleusvorrichtungen nach einem der Ansprüche 1-13 aufweist, die mit phasenverschobenem Takt betätigbar sind.

15. Spritzmaschine nach Anspruch 14, dadurch gekennzeichnet, daß die einzelnen Einschleusvorrichtungen mit parallel geschalteten Förderleitungsabschnitten (32) versehen sind, welche in Förderrichtung zu einer Förderleitung zusammengeführt sind.

16. Spritzmaschine nach Anspruch 14 und/oder Anspruch 15 mit zwei Einschleusvorrichtungen , dadurch gekennzeichnet, daß ihre Vorkammern (42) unterhalb der Absperrschieber (6) durch eine Luftüberströmleitung (90) miteinander verbunden sind.

## Claims

1. Lock apparatus for introducing substantially dry granular bulk materials, in particular for substantially dry concrete mixtures and similar building materials, into a pneumatic spray conveying conduit, wherein said lock apparatus comprises a material supply means (2), a lock chamber (44) and a tubular connecting piece (30) communicating with the pneumatic spray conveying conduit (32), wherein the material supply means (2), the lock chamber (44) and the tubular connecting piece (30) are stationary in relation to each other and generally arranged one above the other, and an inlet shut-off means (34) is provided between the material supply means (2) and the lock chamber (44), and a lower outlet shut-off means (38) is provided between the lock chamber (44) and the tubular connecting piece (30) of the pneumatic spray conveying conduit (32), characterised in that at least the transition area between the material supply means (2) and the lock chamber (44) and that between the lock chamber (44) and the tubular connecting piece (30) consist of an upper (16) and a lower (22) portion of a flexible hose and that the shut-off means form an upper (34) and a lower (38) hose squeezing means having controllable operating means (36, 40) and acting upon the hose portions (16, 22).

2. Apparatus according to claim 1, characterised in that the inner diameter of the lock chamber (44) is equal to the inner diameter of the hose portions (16, 22) and that the lock chamber (44) is defined by the section of the upper hose portion (16) located below the upper hose squeezing means (34), the section of the lower hose portion (22) located above the lower hose sneezing means (38) and an intermediate piece (20) which links the hose portions (16, 22).

3. Apparatus according to claim 1 and/or 2, characterised in that the material supply means (2) has a shut-off slide (6) having a controllable activator (8), said shut-off slide being disposed above the upper hose portion (16), whereby an antechamber (42) is formed between said shut-off slide (6) and the upper hose squeezing means (34).

4. Apparatus according to claim 3, characterised in that the upper hose squeezing means (34) is vertically adjustable relative to the upper hose portion (16), in order to change the volume of the antechamber (42).

5. Apparatus according to one or several of claims 1-4, characterised in that the lock chamber (44) has an air supply (62) which is connected to a controllable valve means (66) which alternately connects said air supply (62) with an air conveying conduit (68), an extractor socket or a suction connection (70).

6. Apparatus accroding to claim 5, characterised in that a dust filter (64) is disposed in the duct between the air supply (62) and the valve means (66).

7. Apparatus according to one or more of claims 3-6, characterised in that the activators (8, 36, 40) for the hose squeezing means (34, 38) and the shut-off slide (6) have a fixed-cycle control means which is set in such manner that the upper hose squeezing means (34) opens and closes if the lower hose squeezing means (38) and the shut-off slide (6) are closed, and that the lower hose squeezing means (38) opens and closes whilst the upper hose squeezing means (34) is closed.

8. Apparatus according to claim 7, characterised in that the air blast can be switched over to the air supply duct (68) of the air connection (62) of the lock chamber (44) during the open phase of the lower hose squeezing means (38).

9. Apparatus according to claim 7 or 8, characterised in that the air connection (62) of the lock chamber (44) can be connected to the extraction socket (70) during the open phase of the upper hose squeezing means (34).

10. Apparatus according to one or more of claims 1-9, characterised in that the conveying conduit (32) has a dead space (82) on the side of the tubular connecting piece (30) located in opposite direction to the flow direction, said dead space having a volume which is smaller than the volume of the lock chamber (44) and having a blast air connection (86) optionally featuring a filter element (84).

11. Apparatus according to one or more of claims 7-10, characterised in that the activators are pneumatic working cylinders (8, 36, 40) and that the fixed-cycle control means has pneumatic end switches, which are activated directly by the hose squeezing means (34, 38) resp. by the shut-off slide (6) resp. by the working cylinders (8, 36, 40) thereof.

12. Apparatus according to one or more of claims 1-11, characterised in that each of the hose squeezing means (34, 38) has two substantially parallel rod-shaped squeezing members (46, 48) disposed on either side of the hose portion (16, 22), of which one (48) is connected with the piston rod (58, 60) and the other (46) is connected with the cylinder housing (54, 56) of a pneumatic working cylinder (36, 40).

13. Apparatus according to claim 12, characterised in that the cylinder housing (54, 56) of the respective working cylinder (36, 40) is disposed in the apparatus with the corresponding axial clearance of motion required to permit a symmetrical opening and closing movement of each hose squeezing means (34, 38).

14. Spraying machine for substantially dry concrete mixtures or similar building materials, characterised in that it features one or more, preferably two, lock apparatus according to one of claims 1-13 which can be operated in out-of-phase cycle.

15. Spraying machine according to claim 14, characterised in that the individual lock apparatus are provided with conveying conduit portions (32) which are set parallel and are joined in one conveyor duct in the direction of flow.

16. Spraying machine according to claim 14 and/or claim 15 with two lock apparatus, characterised in that their antechambers (42) are connected with each other by an air overflow pipe (90) below the shut-off slides (6).

**Revendications**

1. Dispositif d'écluse pour matériaux en vrac, sous forme de grains pratiquement secs, en particulier pour un mélange de béton pratiquement sec et des matériaux analogues, dans un tube de transport pneumatique à projeter, avec un dispositif d'amenée de matériau (2), une chambre d'écluse (44) et une tubulure de raccordement (30), pour le raccordement au tube de transport pneumatique pour projection (32), le dispositif d'amenée de matériau (2), la chambre d'écluse (44) et la tubulure de raccordement (30) étant réalisés relativement stationnaires entre eux et étant disposés de façon générale les uns au-dessus des autres, et entre le dispositif d'amenée de matériau (2) et la chambre d'écluse (44) étant prévu un organe d'isolation d'entrée (34) et entre la chambre d'écluse (44) et la tubulure de raccordement (30) pour le tube de transport pneumatique pour projection (32) étant prévu un organe d'isolement de sortie (38), caractérisé en ce qu'au moins les zones de transition entre le dispositif d'amenée de matériau (2) et la chambre d'écluse (44) ainsi qu'entre la chambre d'écluse (44) et la tubulure de raccordement (30) sont composées d'une section supérieure (16) et d'une section inférieure (22) d'un tuyau flexible, et en ce que les organes d'isolation sont réalisés sous forme d'un dispositif d'écrasement de tuyau supérieur (34) et d'un dispositif d'écrasement de tuyau inférieur (38), comportant des moyens d'actionnement susceptibles (39,40) d'être commandés, qui agissent sur les sections de tuyau (16,22).

2. Dispositif selon la revendication 1, caractérisé en ce que le diamètre intérieur de la chambre d'écluse (44) correspond au diamètre intérieur des sections de tuyau (16,22) et en ce que la chambre d'écluse (44) est formée par la zone, qui se trouve au-dessous du dispositif d'écrasement de tuyau supérieur (34), de la section de tuyau supérieure (16), par la zone qui se trouve au-dessous du dispositif d'écrasement de tuyau inférieur (38), de la section de tuyau inférieure (22) et par une pièce intermédiaire, reliant les sections de tuyau (16,22).

3. Dispositif selon la revendication 1 et/ou 2, caractérisé en ce que le dispositif d'amenée de matériau (2) est équipé d'un registre d'isolement (6), disposé au-dessus de la section de tuyau supérieure (16) et comportant un moyen d'actionnement (8) susceptible d'être commandé, faisant qu'une préchambre (42) est formée entre ce registre d'isolement (6) et le dispositif d'écrasement de tuyau supérieur (34).

4. Dispositif selon la revendication 3, caractérisé en ce que le dispositif d'écrasement de tuyau supérieur (34) est réglable en hauteur par rapport à la section de tuyau supérieure (16), en vue de modifier le volume de la préchambre (42).

5. Dispositif selon l'une ou plusieurs des revendications 1 à 4, caractérisé en ce que la chambre d'écluse (44) est équipée d'un raccordement d'air (62), relié à un dispositif à soupape (66) susceptible d'être commandé, qui le relie alternativement à une conduite d'amenée d'air (68), à une tubulure d'échappement ou à un raccordement d'aspiration (70).

6. Dispositif selon la revendication 5, caractérisé en ce qu'un filtre à poussière (64) est disposé dans la conduite, entre le raccordement d'air (62) et le dispositif à soupape (66).

7. Dispositif selon l'une ou plusieurs des revendications 3 à 6, caractérisé en ce que les moyens d'actionnement (9,36,40), pour les dispositifs d'écrasement de tuyau (34,38) et le registre d'isolement (6), sont pourvus d'un dispositif de commande cadencée, qui est mis en service de telle façon que le dispositif d'écrasement de tuyau supérieur (34) s'ouvre et se ferme, lorsque le dispositif d'écrasement de tuyau inférieur (38) et le registre d'isolement (6) sont fermés, et que le registre d'isolement (6) et le dispositif d'écrasement de tuyau inférieur (38) s'ouvrent et se ferment, tandis que le dispositif d'écrasement de tuyau supérieur (34) est fermé.

8. Dispositif selon la revendication 7, caractérisé en ce que l'air de soufflage peut être commuté sur la conduite d'amenée d'air (38) du raccordement d'air (62) de la chambre d'écluse (44), pendant la phase d'ouverture du dispositif d'écrasement de tuyau inférieur (38).

9. Dispositif selon la revendication 7 ou 8, caractérisé en ce que le raccordement d'air (62) de la chambre d'écluse (44) est susceptible d'être relié au raccordement d'aspiration (70), pendant la phase d'ouverture du dispositif d'écrasement de tuyau supérieur (34).

10. Dispositif selon l'une ou plusieurs des revendications 1 à 9, caractérisé en ce que le dispositif de transport (32) est équipé, sur son côté, opposé au dispositif de transport, de la tubulure de raccordement (30), d'un volume mort (82) dont la valeur est inférieure à celle du volume de la chambre d'écluse (44), et qui est équipé d'un raccordement d'air de soufflage (86) présentant, le cas échéant, un élément filtrant (84).

11. Dispositif selon l'une ou plusieurs des revendications 7 à 10, caractérisé en ce que les moyens d'actionnement sont des vérins pneumatiques (8,36,40) et le dispositif de commande cadencée présente des interrupteurs pneumatiques de fin de course, qui sont directement actionnés par les dispositifs d'écrasement de tuyau (34,38), respectivement le registre d'isolement (6), respectivement leurs vérins (8,36,40).

12. Dispositif selon l'une ou plusieurs des revendications 1 à 11, caractérisé en ce que chacun des dispositifs d'écrasement de tuyau (34,38) présente deux éléments d'écrasement (46,48) en forme de barre, sensiblement parallèles et disposés des deux côtés de la section de tuyau (16,22), dont l'un (48) est relié à la tige de piston (46,48) et dont l'autre (46) est relié au carter cylindrique (54,56) d'un vérin pneumatique (36,40).

13. Dispositif selon la revendication 12, caractérisé en ce que, pour obtenir un mouvement symétrique d'ouverture et de fermeture de chaque dispositif d'écrasement de tuyau (34,38), le carter cylindrique (54,56) du vérin (36,40) correspondant est monté dans le dispositif avec un jeu de mouvement axial correspondant.

**14.** Machine à projeter, pour des mélanges de béton pratiquement secs ou matériaux de construction analogues, caractérisée en ce qu'elle présente un ou plusieurs, de préférence deux dispositifs d'écluse selon l'une des revendications 1 à 13, susceptibles d'être actionnés suivant une cadence offrant un décalage de phase.

**15.** Machine selon la revendication 1, caractérisée en ce que les différents dispositifs d'écluse sont équipés de sections de tube de transport (32) branchées en parallèle, qui sont groupées dans le dispositif de transport, pour former un tube de transport.

**16.** Machine selon la revendication 14 et/ou la revendication 15, comportant deux dispositifs d'écluse, caractérisée en ce que leurs préchambres (42) sont reliées entre elles au-dessous du registre d'isolement (6), au moyen d'un tube de surdébit d'air (90).

FIG.1

FIG. 2

FIG. 3

EP 0 300 113 B1